# EUROPÄISCHE PATENTANMELDUNG

(11) **EP 2 141 342 A2**
(43) Veröffentlichungstag der Anmeldung: **06.01.2010**
(21) Anmeldenummer: 09008820.4
(22) Anmeldetag: 06.07.2009
(51) Int. Cl.: F02D 41/00, F02B 37/007, F02B 37/013, F02B 37/04

(54) **Selbstzündende Verbrennungskraftmaschine mit einem Niederdrucklader und einem Hochdrucklader**

(30) Priorität: 04.07.2008 DE 102008031425
(71) Anmelder: Volkswagen Aktiengesellschaft, 38436 Wolfsburg (DE)
(72) Erfinder: Pott, Ekkehard, 38518 Gifhorn (DE); Franke, Jens-Erik, 38518 Gifhorn (DE); Hahne, Bernd, 38126 Braunschweig (DE); Rehnert, Kurt, 38173 Sickte (DE)
(74) Vertreter: Pohlmann, Bernd Michael

(57) **Zusammenfassung**

Die Erfindung betrifft eine selbstzündende Verbrennungskraftmaschine (1) und ein entsprechendes Verfahren zum Betrieb einer derartigen Verbrennungskraftmaschine.

Die Verbrennungskraftmaschine ist mit
- einem ersten Lader (3),
- einem dem ersten Lader (3) saugseitig in Richtung der Verbrennungskraftmaschinenachgeschalteten zweiten Lader (5) und
- einer Steuereinrichtung versehen, wobei
- von der Steuereinrichtung der erste und zweite Lader (3, 5) derart einstellbar sind oder eingestellt werden, dass in einem Bereich von mindestens 30 Prozent eines Drehzahl-Mitteldruck- Kennfeldes (57) der Verbrennungskraftmaschine (1) zwischen der minimalen und der maximalen Drehzahl der Verbrennungskraftmaschine (1)
- die NOx-Rohemission (53) weniger als 3,8 g/kWh und
- die Partikel- Rohemission (55) weniger als 0,15 g/kWh beträgt.

## Beschreibung

Die Erfindung betrifft eine selbstzündende Verbrennungskraftmaschine mit einem Niederdrucklader und einem dem Niederdrucklader saugseitig nachgeschalteten Hochdrucklader.

Es ist bekannt, für Verbrennungskraftmaschinen, insbesondere Dieselmotoren, eine Aufladung mit mehreren Ladern beispielsweise in Reihe geschaltet, vorzusehen. Mittels der Aufladung wird eine Drehmomentsteigerung und/oder Leistungssteigerung erzielt. Es ist bekannt, eine spezifische Leistung von 70 kW pro Liter zu erzielen. Aus den Druckschriften DE 10 2005 004 122 A1, US 4 903 488 und der DE 32 27 459 A1 sind doppelt aufgeladene Verbrennungskraftmaschinen bekannt.

Aufgabe der Erfindung ist es bei einer Verbrennungskraftmaschine mit Doppelaufladung eine reduzierte Schadstoffemission darzustellen.

Die Aufgabe ist gelöst mit den Merkmalen der unabhängigen Ansprüche.

Vorzugsweise ist die Aufgabe gelöst mit einer selbstzündenden Verbrennungskraftmaschine mit einem ersten Drucklader und einem dem ersten Drucklader saugseitig nachgeschalteten zweiten Drucklader. Von einer Steuerung sind der erste und zweite Lader derart einstellbar, dass in einem Bereich von mindestens 30 Prozent zwischen der minimalen und der maximalen Drehzahl der Verbrennungskraftmaschine eines Drehzahl- Mitteldruck- Kennfeldes der Verbrennungskraftmaschine die NOx-Rohemission weniger als 3,8 g/kWh und die PartikelRohemission weniger als 0,15 g/kWh beträgt, oder dass die NOx-Rohemission weniger als 3,8 g/kWh und die Russzahl <2,3 der Rohemission beträgt. Es vesteht sich, dass zusätzlich weitere, an sich bekannte Massnahmen zur Verringerung der NOx-Rohemission und der Partikel- Rohemission eingesetzt werden, wie eine Abgasrückführung und/oder eine Optimierung des Zeitpunktes der Kraftstoffeinspritzung in die Zylinder.

Vorzugsweise ist die selbstzündende Verbrennungskraftmaschine mit einem Niederdrucklader und einem dem Niederdrucklader saugseitig nachgeschalteten Hochdrucklader versehen und weist ein Drehzahl - Mitteldruck -Kennfeld auf, das Drehzahlen der Verbrennungskraftmaschine Mitteldrücke zuordnet, derart dass in einem Bereich von mindestens 30 Prozent des Kennfeldes, die Verbrennungskraftmaschine eine Nox-Emission von weniger als 3,8 g/kWh und eine Partikelemission von weniger als 0,15 g/kWh aufweist.

Vorzugsweise sind von der Steuerung der erste und zweite Lader derart einstellbar, dass für mindestens 40, 50, 60, 70, 80 oder 90 Prozent des Kennfelds die Nox-Emissionen weniger als 3,8 g/kWh und die Partikelemissionen von weniger als 0,15 g/kWh betragen.

Vorteilhaft können mittels der doppelten Aufladung die Nox-Emission sowie die Partikelemission derartig abgesenkt werden, dass auf teure Nox-Abgas-Nachbehandlungen, beispielsweise über Nox-Speicherkatalysatoren und/oder Harnstoff-SCR-Systeme verzichtet werden kann.

Vorteilhaft ergibt sich trotz der niedrigen Emissionen eine vergleichsweise günstige und einfach aufgebaute Verbrennungskraftmaschine. Vorteilhaft können so auf einfache Art und Weise gesetzliche Grenzwerte, beispielsweise EU5 beziehungsweise EU6, mittels der Doppelaufladung und des Kennfeldes erreicht werden, wobei eine aufwendige Abgasnachbehandlung, insbesondere eine SCR-Abgasnachbehandlung, nicht notwendig ist.

Vorzugsweise ist vorgesehen, dass der Bereich von mindestens 30 Prozent des Kennfelds zwischen der minimalen und der maximalen Drehzahl der Verbrennungskraftmaschine zumindest einen Teilbereich mit einer geschlossenen Umrandungskurve umfasst. Ferner ist es mögliche, dass der Bereich von mindestens 30 Prozent des Kennfelds zwischen der minimalen und der maximalen Drehzahl der Verbrennungskraftmaschine zumindest einen Teilbereich umfasst, der aus einer Punktwolke aus einzelnen Drehzahlwerten und Mitteldruckwerten besteht.

Bei einem Ausführungsbeispiel der Verbrennungskraftmaschine ist vorgesehen, dass in einem Betriebspunkt mit einer Drehzahl von 2.000 min⁻¹ und einem Mitteldruck von 6 bar, die Verbrennungskraftmaschine eine Nox-Emission von weniger als 3,8 g/kWh und eine Partikelemission von weniger als 0,15 g/kWh aufweist. Vorteilhaft können in dem genannten Betriebspunkt die vergleichsweise niedrigen Emissionswerte erreicht werden.

In einer bevorzugten Ausführungsform der Erfindung werden mittels der Steuereinrichtung Drehzahlen des Verbrennungsmotors Mengen von pro Arbeitszyklus eines Arbeitszylinders in den Zylinder eingespritzem Kraftstoff zugeordnet, wobei sich ein Mitteldruck einstellt.

Bei einem weiteren Ausführungsbeispiel der Verbrennungskraftmaschine ist vorgesehen, dass mittels des Drehzahl - Mittledruck Kennfeldes bestimmten Betriebspunkten oder Betriebsbereichen zusätzlich ein Abgaslambdawert zuordenbar ist. Mittels des Abgaslambdawerts ist die Gemischbildung der Verbrennungskraftmaschine definierbar.

Bei einem weiteren Ausführungsbeispiel der Verbrennungskraftmaschine ist vorgesehen, dass in einem Bereich um einen Betriebspunkt 2.500 min⁻¹ (1+/- 0.1) und den Mitteldruck von 6 bar ( 1+/- 0.1) der Abgaslambdawert mindestens 1,7, 1,8, 1,9, 2,0, 2,2 oder 2,5 beträgt. Vorteilhaft handelt es sich um eine magere Gemischbildung, die einer hohen Ladungsverdünnung entspricht.

Bei einem weiteren Ausführungsbeispiel der Verbrennungskraftmaschine ist vorgesehen, dass der Niederdrucklader eine mechanische Aufladung und/oder einen elektrisch und/oder hydraulisch angetriebenen Verdichter und/oder einen Niederdruckturbolader und/oder der Hochdrucklader eine mechanische Aufladung und/oder einen elektrisch und/oder hydraulisch angetriebenen Verdichter und/oder einen Hochdruckturbolader und/oder zwei parallel geschaltete Turbolader aufweist. Mittels der Aufladung kann ein hoher Ladedruck erzielt werden, der zum Erzielen einer hohen Ladungsverdünnung ausgenutzt werden kann.

Bei einem weiteren Ausführungsbeispiel der Verbrennungskraftmaschine, weist diese eine Abgasrückführung auf. Mittels der Abgasrückführung kann Abgas auf die Saugseite des Motors überströmen, was beispielsweise zu einer niedrigeren Verbrennungstemperatur führen und damit eine Verringerung der Nox-Emission bewirken.

Bei einem weiteren Ausführungsbeispiel der Verbrennungskraftmaschine ist vorgesehen, dass die Abgasrückführung abgasseitig stromauf vor dem Hochdruckturbolader abzweigt und saugseitig stromab nach dem Hochdruckturbolader einmündet. Vorteilhaft ergibt sich eine reine Hochdruckabgasrückführung. Vorteilhaft kann auf eine zusätzliche Niederdruckabgasrückführung verzichtet werden, wobei die Verbrennungskraftmaschine nur die Hochdruckabgasrückführung aufweist.

Bei einem weiteren Ausführungsbeispiel der Verbrennungskraftmaschine ist vorgesehen, dass eine sich aus dem Kennfeld ergebende spezifische maximale Leistung der Verbrennungskraftmaschine weniger als 80, 70, 60, 55, 50, 45 oder 40 kW pro dm³ Motorvolumen der Verbrennungskraftmaschine beträgt. Die spezifische Maximalleistung kann mittels des Kennfeldes zur Erzielung der niedrigen Emissionen zugeordnet beziehungsweise begrenzt werden.

Bei einem weiteren Ausführungsbeispiel der Verbrennungskraftmaschine ist vorgesehen, dass ein sich aus dem Kennfeld ergebendes spezifische Maximalmoment der Verbrennungskraftmaschine weniger als 250, 220, 200, 180, 160, 140 oder 120 Nm/dm³ Motorhubvolumen der Verbrennungskraftmaschine beträgt. Vorteilhaft kann mittels des Kennfelds das spezifische Maximalmoment der Verbrennungskraftmaschine zugeordnet beziehungsweise begrenzt werden, wobei sich vorteilhaft die niedrige Nox-Emission und Partikelemissionen ergeben.

Bei einem weiteren Ausführungsbeispiel der Verbrennungskraftmaschine ist vorgesehen, dass Injektoren der Verbrennungskraftmaschine einen stationären Durchfluss von weniger als 550, 500, 460, 420, 380, 340 oder 300 ml/30 sec. bei einem Eintrittsdruck von 100 bar aufweisen. Vorteilhaft können aufgrund der vergleichsweise niedereingestellten Mitteldrücke eines Arbeitstakts der Verbrennungskraftmaschine auch vergleichsweise niederausgelegte Injektoren eingesetzt werden.

Bei einem weiteren Ausführungsbeispiel der Verbrennungskraftmaschine ist vorgesehen, dass ein Zylinderhubvolumen der Verbrennungskraftmaschine weniger als 0,65, 0,6, 0,55, 0,5, 0,45, 0,4 oder 0,3 dm³ aufweist. Vorteilhaft kann mittels der Begrenzung des Zylinderhubvolumens eine saubere Verbrennung und damit eine Reduzierung der Emissionen erreicht werden.

Bei einem weiteren Ausführungsbeispiel der Verbrennungskraftmaschine ist vorgesehen, dass die Verbrennungskraftmaschine eine Zylinderanzahl von 5 oder weniger als 5 aufweist.

Die Aufgabe ist außerdem mit einem Kraftfahrzeug mit einer vorab beschriebenen Verbrennungskraftmaschine gelöst. Es ergeben sich die vorab beschriebenen Vorteile.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen. Es zeigen:
- Figur 1: eine schematische Darstellung einer Verbrennungskraftmaschine mit einem Niederdrucklader und einem Hochdrucklader;
- Figur 2: ein Schaubild eines Vergleichs zwischen einer Verbrennungskraftmaschine mit einfacher Aufladung und Doppelaufladung in einem Hochlastbetrieb; und
- Figur 3: den in Figur 2 gezeigten Vergleich, jedoch für einen Schwachlastbetrieb
- Figur 4: ein Schaubild eines Vergleichs von Partikelemissionen und NOx-Emissionen in Abhängigkeit von einer Abgasrückführrate zwischen einer Verbrennungskraftmaschine mit einfacher Aufladung und Doppelaufladung.

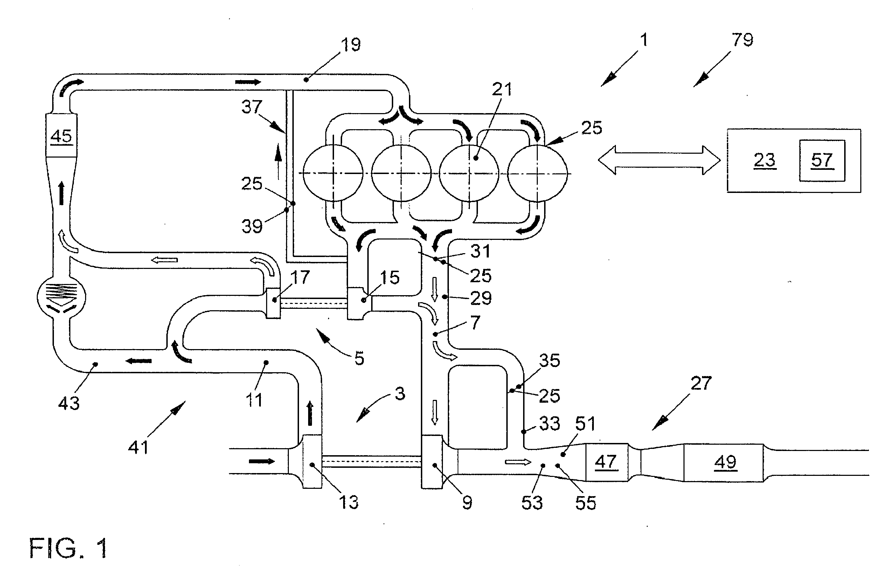

Figur 1 zeigt eine schematische Ansicht einer Verbrennungskraftmaschine 1 mit einem Niederdrucklader 3 und dem Niederdrucklader 3 saugseitig nachgeschalteten Hochdrucklader 5.

Die Lader 3, 5 sind jeweils als Turbolader ausgeführt, wobei der Niederdrucklader 3 eine in einen Abgasstrom 7 der Verbrennungskraftmaschine 1 geschaltete Niederdruckturbine und einen dieser mechanisch zugeordneten und in einen Ansaugstrom 11 der Verbrennungskraftmaschine 1 geschalteten Niederdruckverdichter 13 aufweist. Der Hochdruckverdichter 5 weist eine in den Abgasstrom 7 geschaltete Hochdruckturbine 15 und einen dieser mechanisch zugeordneten Hochdruckverdichter 17 auf, wobei der Hochdruckverdichter 17 in den Ansaugstrom 11 geschaltet ist. Der Niederdruckverdichter 13 und der Hochdruckverdichter 17 sind in Reihe geschaltet und dienen zur Erhöhung eines Ladedrucks des Ansaugstroms 11 der Verbrennungskraftmaschine 1. Der verdichtete Ansaugstrom 11 kann mit dem Ladedruck 19 Zylindern 21 zur exothermen Reaktion mit einem Kraftstoff, insbesondere einem Dieselkraftstoff, beispielsweise einem Dieselkraftstoff nach DIN EN 590, zugeführt werden.

Der Niederdrucklader 3 liefert in dem Betriebsbereich, in dem beide Lader parallel im Eingriff sind den geringeren Anteil am Gesamtluftmassenstrom, der Hochdrucklader 5 den größeren Anteil. Üblicherweise ist der Niederdrucklader 3 der baulich größere und deckt den oberen Drehzahl- und Lastbereich alleine bzgl. des Luftmassenstroms ab. Im unteren Drehzahl- und Lastbereich unterstützt er den üblicherweise kleineren Hochdrucklader 5.

Zur Gemischbildung ist eine Steuereinheit 23 vorgesehen, die auf, in Figur 1 nur teilweise dargestellte, Steuervorrichtungen 25 wirkt. Den Zylindern 21 ist eine Abgasanlage 27 nachgeschaltet, mittels der der Abgasstrom 7 führbar ist. Die Steuervorrichtungen 25 können beispielsweise eine in einen Hochdruckabgasbypass 29 geschaltete Abgasklappe 31, ein in einen Niederdruckabgasbypass 33 geschaltetes Wastegate 35, sowie eine in eine Hochdruckabgasrückführung 37 geschaltete Abgasrückführungsklappe bzw. ein Ventil 39 aufweisen. Mittels der Abgasklappe 31 und des Wastegates 35 und/oder der Abgasrückführungsklappe bzw. des Ventils 39 kann der Ladedruck 19 eingestellt werden. Mittels der Abgasrückführungsklappe bzw. des Ventils 39 der Hochdruckabgasrückführung 37 kann eine Rückführungsrate des Abgasstroms 7 stromaufwärts der Hochdruckturbine 15 in den Ansaugstrom 11 stromabwärts des Hochdruckverdichters 17 eingestellt werden. Die Hochdruckabgasrückführung 37 zweigt stromauf vor der Hochdruckturbine 15 ab und mündet nach dem Hochdruckverdichter 17 in den Ansaugstrom 11.

Zum Führen des Ansaugstroms 11 weist die Verbrennungskraftmaschine 1 eine Ansaugvorrichtung 41 auf, in die der Niederdruckverdichter 13 und der Hochdruckverdichter 17 geschaltet sind. Die Ansaugvorrichtung 41 dient zum Führen des Ansaugstroms 11. Parallel zum Hochdruckverdichter 17 weist die Ansaugvorrichtung 41 einen Hochdruckansaugbypass 43 auf, mittels dessen der Ansaugstrom 11 zumindest teilweise, abhängig von einem Betriebszustand der Verbrennungskraftmaschine 1 an dem Hochdruckverdichter 17 vorbeigeführt werden kann. Stromaufwärts des Hochdruckansaugbypasses 43 und des Hochdruckverdichters 17 weist die Ansaugvorrichtung 41 eine Ladeluftkühlung 45 zum Abführen von in dem Ansaugstrom 11 geführter Wärme auf.

Stromabwärts des Niederdruckabgasbypasses 33 und der Niederdruckturbine 9 weist die Abgasanlage 27 einen Oxydationskatalysator (Oxykat) 47 und diesem nachgeschaltet einen Partikelfilter 49, jeweils zur Reinigung des Abgasstroms 7 auf. In dem Abgasstrom 7 wird vor Eintritt in den Oxykat 47 und dem Partikelfilter 49 eine Rohemission 51 mit einer Nox-Emission 53, sowie einer Partikelemission 55 geführt. Die Rohemission 51 beziehungsweise die Nox-Emission 53 sowie die Partikelemission 55 sind vom Betriebszustand der Verbrennungskraftmaschine 1 und von einer entsprechenden Einstellung des Betriebszustandes mittels der Steuervorrichtung 23 abhängig. Zur Charakterisierung von Betriebszuständen der Verbrennungskraftmaschine weist diese bzw. die Steuereinrichtung 23 ein Drehzahl - Mitteldruck- Kennfeld 57 auf. Vorteilhaft kann die Ansteuerung mittels der Steuereinrichtung 23, insbesondere der Steuervorrichtungen 25 so erfolgen, dass in einem Bereich von mindestens 30 Prozent des Kennfeldes 57 zwischen der minimalen und der maximalen Drehzahl der Verbrennungskraftmaschine 1 die Nox-Emission 53 weniger als 3,8 g pro kWh und die Partikelemission 55 weniger als 0,15 g pro kWh betragen. Ferner kann das Kennfeld 57 für eine Gemischbildung wesentliche Größen, beispielsweise einen Ladedruck, eine Luftmasse in mg pro Hub und/oder weitere Größe, beispielsweise einen Abgaslambdawert aufweisen, beziehungsweise soweit nicht direkt voneinander abhängig, einander zuordnen.

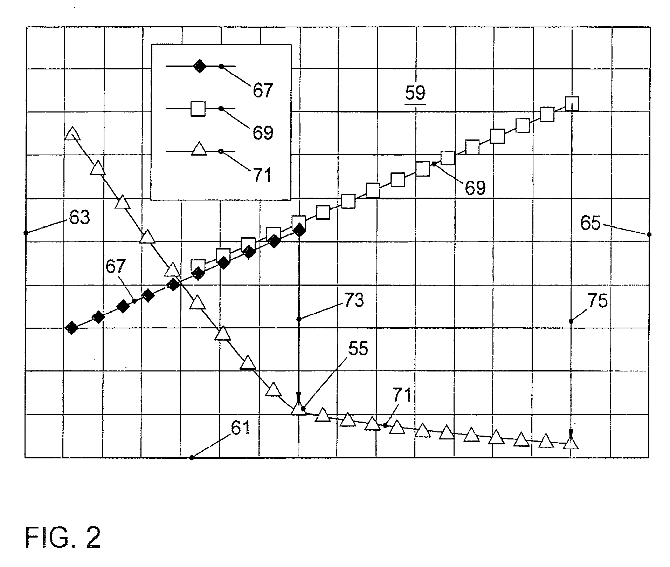

Figur 2 zeigt ein Schaubild 59 mit einem Vergleich einer grundsätzlich möglichen Auslegung zwischen der erfindungsgemäßen Verbrennungskraftmaschine 1 mit einer Verbrennungskraftmaschine mit einfacher Aufladung. In dem Schaubild 59 sind auf einer X-Achse 61 der Ladedruck 19 auf einer ersten Y-Achse 63 eine Luftmasse in mg pro Hub, sowie auf einer zweiten Y-Achse 65 die Partikelemission 55 aufgetragen. Das Schaubild 59 stellt einen Hochlastbetrieb der Verbrennungskraftmaschine 1 dar, mit einer Drehzahl von 2.000 min⁻¹ und einer Einspritzung von 40 mg pro Hub. Die auf der ersten Y-Achse 63 aufgetragene Luftmasse kann beispielsweise in einem Bereich zwischen 0 und 2.000 mg pro Hub aufgetragen sein. Die X-Achse 61 kann Werte des Ladedrucks 19 zwischen 1.000 und 3.500 mbar aufweisen. Die zweite Y-Achse 65 kann Werte einer Rauchzahl FSN (ISO 10054) zwischen 0 und 10 aufweisen.

Ein erster Graph 67 stellt den Zusammenhang zwischen dem Ladedruck 19 und der Luftmasse in mg pro Hub für die einfach aufgeladene Verbrennungskraftmaschine 1 dar. Ein zweiter Graph 69 stellt denselben Zusammenhang für die doppelt aufgeladene Verbrennungskraftmaschine 1 dar. Ein dritter Graph 71 symbolisiert die Partikelemission 55, wie sie sich bei der Drehzahl von 2.500 min⁻¹, 40 mg Einspritzung und des Ladedrucks 19 ergibt. Es ist zu erkennen, dass die doppelt aufgeladene Verbrennungskraftmaschine 1 wesentlich höhere Ladedrücke und damit Luftmassen in mg pro Hub erreichen kann. Mittels eines ersten Pfeils ist für einen maximal möglichen Ladedruck der einfach aufgeladenen Verbrennungskraftmaschine 1 der Zusammenhang zu einer minimal erreichbaren Rauchzahl angedeutet. Es ist zu erkennen, dass die Rauchzahl grundsätzlich bei gleichbleibender Einspritzung und Drehzahl mit einer Erhöhung des Ladedrucks abnimmt. Die minimal erreichbare Rauchzahl beziehungsweise Partikelemission 55 ist also durch den maximal erreichbaren Ladedruck limitiert. Dieser kann beispielsweise für die einfach aufgeladene Verbrennungskraftmaschine bei ungefähr 2.100 mbar liegen. Mittels eines zweiten Pfeils 75 ist ein rechter Endpunkt des zweiten Graphs 69 mit der dazugehörigen Partikelemission 55 verdeutlicht. Es ist zu erkennen, dass die Partikelemission 55 bei maximalem Ladedruck 29, beispielsweise in Höhe von ca. 3.200 mbar ein Minimum erreicht. Vorteilhaft kann durch eine Erhöhung der Luftmasse bei gleichbleibender Einspritzung, was einer Erhöhung des Verbrennungslambdawerts entspricht, die Partikelemission 55 deutlich abgesenkt werden. Der entsprechende Zusammenhang, also die Wahl des Ladedrucks beziehungsweise der Luftmasse in mg pro Hub bei gleichbleibender Einspritzung und Drehzahl und damit des Abgaslambdawertes kann mittels des Kennfelds 57 vorteilhaft so festegelegt werden, dass die Rauchzahl FSN als Maß für die Partikelemission 55 im Idealfalls nur circa 0,3 beträgt (Pfeil 75), wobei der Ladedruck 3200 mbar und die Luftmasse 1620 mg/Hub betragen.

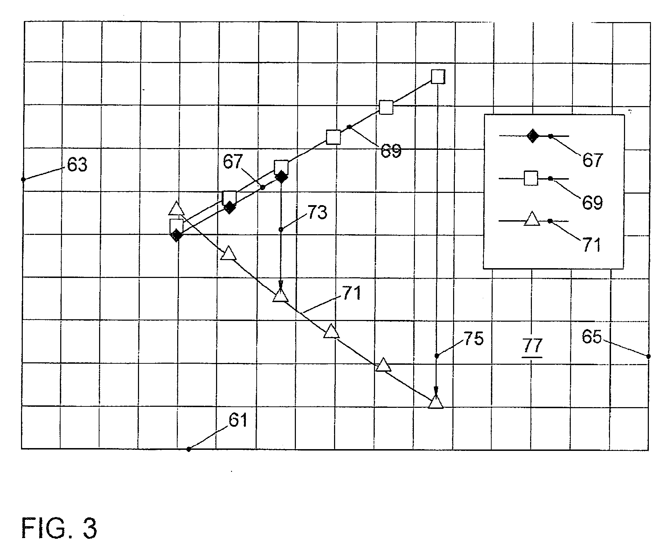

Figur 3 zeigt ein weiteres Schaubild 77, das dem in Figur 2 dargestellten Schaubild 59 entspricht, jedoch einen Schwachlastbetrieb der Verbrennungskraftmaschine 1 und der einfach aufgeladenen Verbrennungskraftmaschine bei einer Drehzahl von 3.500 min⁻¹ und 15 mg Einspritzung pro Hub darstellt. Dabei kann die erste Y-Achse 63 beispielsweise eine Luftmasse in mg pro Hub zwischen 0 und 1.000 darstellen, die zweite Y-Achse 65 eine Partikelemission 55 mit einer Rauchzahl zwischen 0 und 2. Auf der X-Achse 61 kann der Ladedruck 19 zwischen 800 und 2.000 mbar aufgetragen sein. Es zeigt sich auch bei diesem Betriebspunkt im Schwachlastbetrieb der Zusammenhang zwischen dem ansteigenden Ladedruck 19 und der abfallenden Partikelemission 55, die der von links oben nach rechts unten abfallende dritte Graph 71 anzeigt. Mittels der Pfeile 73 und 75 sind entsprechend jeweils die minimal erreichbaren Partikelemissionen 55 bei einfacher Aufladung und bei der zweifachen Aufladung der Verbrennungskraftmaschine 1 symbolisiert. Der entsprechende Zusammenhang, also die Wahl des Ladedrucks beziehungsweise der Luftmasse in mg pro Hub bei gleichbleibender Einspritzung und Drehzahl und damit des Abgaslambdawertes kann mittels des Kennfelds 57 vorteilhaft so festegelegt werden, dass die Rauchzahl als Maß für die Partikelemission 55 im Idealfall nur circa 0,25 beträgt (Pfeil 75), wobei der Ladedruck 1600 mbar und die Luftmasse 870 mg/Hub betragen.

Bekanntlich gibt es bei Dieselmotoren einen Zielkonflikt zwischen Partikelemissionen und NOx-Emissionen, wobei eine Maßnahme, welche zur Verringerung einer dieser Schadstoffkomponenten führt, zu einer Erhöhung der jeweils anderen führt. Beispielsweise wird durch die mit erhöhter Abgasrückführrate erreichte Absenkung lokaler Spitzentemperaturen und Verringerung der NOx-Emissionen die Russoxydation reduziert und damit die Partikelemission erhöht.

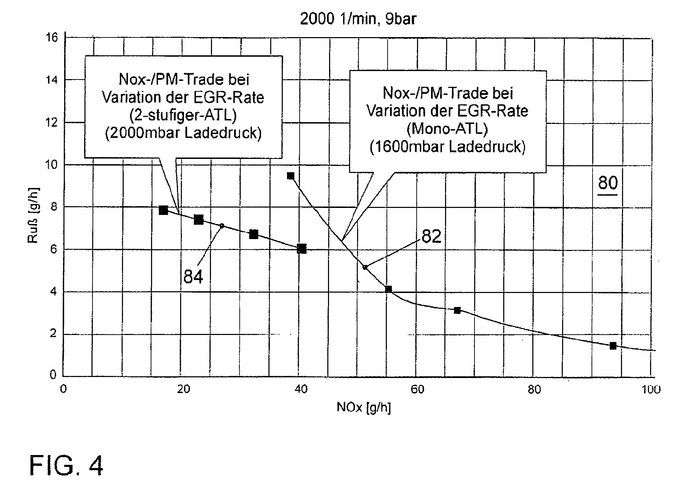

Bei der erfindungsgemäßen Verbrennungskraftmaschine gelingt es jedoch, gleichermaßen Partikelemissionen und NOx-Emissionen zu reduzieren. Figur 4 zeigt ein Schaubild 80 eines Vergleichs von Partikelemissionen und NOx-Emissionen in Abhängigkeit von einer Abgasrückführrate zwischen einer Verbrennungskraftmaschine mit einfacher Aufladung 82 und Doppelaufladung 84, wobei auf der X- Achse die NOx- Rohemission und auf der Y-Achse die Rauchzahl FSN aufgetragen ist. Während bei der Verbrennungskraftmaschine mit einfacher Aufladung und einem Ladedruck von 1600mbar, wie der Graph 82 zeigt, ein deutlicher Trade-off zwischen von Partikelemissionen und NOx-Emissionen auftritt, ist der Trade-off bei Doppelaufladung, wie Graph 84 zeigt, wesentlich geringer. Sowohl Partikelemissionen als auch NOx-Emissionen sind bei einem Ladedruck von 2000 mbar reduziert.

Vorteilhaft kann im Vergleich zu bekannten doppelt aufgeladenen Dieselmotoren auf eine übermäßige Leistungs- und/oder Drehmomentsteigerung mittels der Zuordnungsvorschrift des Kennfelds 57 zu Gunsten der niedrigen Rohemissionen 51, insbesondere der Nox-Emission sowie der Partikelemission 55, verzichtet werden. Vorteilhaft erfolgt mittels der Doppelaufladung und des Kennfelds 57 eine hohe Ladungsverdünnung, die wesentlich zu einer Reduktion der Nox-Emission 53 beiträgt. Vorteilhaft kann auf eine vergleichsweise aufwändige Nox-Abgasnachbehandlung verzichtet werden. Eine zusätzliche Abgasreinigung kann beispielsweise, wie in Figur 1 dargestellt, lediglich mittels des einfachen Oxykats 47 und des nachgeschalteten Partikelfilters 49 erfolgen. Es ist jedoch auch denkbar, mittels des Kennfelds 57 die Verbrennungskraftmaschine 1 so einzustellen, dass auch der Oxykat 47 und der nachgeschaltete Partikelfilter 49 verzichtbar werden. Vorteilhaft kann auf Nox-Speicherkatalysatoren und/oder Harnstoff-SCR-Systeme verzichtet werden. Es ist denkbar, lediglich mittels der Doppelaufladung der Verbrennungskraftmaschine 1 und der entsprechenden Ansteuerung mittels des Kennfelds 57 strengere Abgasnormen, wie beispielsweise EU5 beziehungsweise EU6 zu erreichen.

Vorteilhaft kann dies beispielsweise mittels der Zuordnung des Kennfeldes 57 für einen Betriebpunkt von 2.500 min⁻¹ und einem Mitteldruck von 6 bar erreicht werden, dass die Nox-Emission 53 weniger als 3,8 g/kWh sowie die Partikelemission 55 weniger als 0,15 g/kWh beziehungsweise eine Russzahl von < 2,3 aufweist. Vorteilhaft können diese Werte auch für mindestens 90 Prozent des Kennfelds 57 für Drehzahlen zwischen 2.000 und 2.800 min⁻¹ und entsprechend zugeordneten Mitteldrücken zwischen 4 und 12 bar erreicht werden. Mittels des Kennfelds 57 kann zusätzlich ein Abgaslambdawert von mindestens 1,7, 1,8, 1,9, 2,0, 2,2 oder 2,5 zugeordnet werden.

Ferner ist es vorgesehen, den Ladedruck mittels beliebigen Ladern 3,5 zu erzeugen, beispielsweise mittels Ausführung als Turbolader wie in Figur 1 dargestellt, mechanischer Aufladung, elektrisch oder hydraulisch angetriebener Verdichter. Außerdem ist es denkbar, neben den zwei in Figur 1 gezeigten Abgasturboladern auch weitere Abgasturbolader einzusetzen, beispielsweise den Hochdrucklader 5 als zwei parallel geschaltete Turbolader auszuführen.

Vorteilhaft kann die Verbrennungskraftmaschine 1, wie in Figur 1 dargestellt, zumindest zwei in Reihe geschaltete Abgasturboblader aufweisen. Ferner kann die Verbrennungskraftmaschine 1, insbesondere zur weiteren Optimierung der Rohemission 51, eine externe Abgasrückführung, beispielsweise die in Figur 1 gezeigte Hochdruckabgasrückführung 37 aufweisen.

Eine spezifische Maximalleistung der Verbrennungskraftmaschine 1 kann beispielsweise weniger als 80, 70, 65, 60, 55, 50, 45 oder 40 kW/dm³ Motorhubvolumen der Verbrennungskraftmaschine 1 betragen. Entsprechend kann ein spezifisches Maximalmoment der Verbrennungskraftmaschine 1 mittels des Kennfeldes 57 auf maximal 250, 220g 200, 180, 160, 140 oder 120 nm/dm³ Motorvolumen limitiert sein. Vorteilhaft können bei dieser Auslegung, in Figur 1 nicht näher dargestellte, den Zylinder 21 der Verbrennungskraftmaschine 1 zugeordnete Injektoren einen stationären Durchfluss von weniger als 550, 500, 460, 420, 380, 340 oder 300 ml/30 Sekunden bei einem Eintrittsdruck von 100 bar aufweisen. Bevorzugt kann der stationäre Durchfluss 460 ml/30 Sekunden betragen.

Die Verbrennungskraftmaschine 1 kann ein Zylinderhubvolumen von weniger als 0,65, 0,60, 0,55, 0,50, 0,45, 0,40, 0,35 dm³ aufweisen. Bevorzugt kann das Zylinderhubvolumen 0,5 dm³ aufweisen.

Die Anzahl der Zylinder 21 der Verbrennungskraftmaschine 1 kann beispielsweise 5 betragen, bevorzugt 4, oder weniger. Vorteilhaft kann ein, in Figur 1 teilweise dargestelltes Kraftfahrzeug 79, das mit der Verbrennungskraftmaschine 1 ausgerüstet ist, vergleichsweise niedrige Rohemissionen 51 aufweisen. Das Kraftfahrzeug 79 kann beispielsweise bei einem Betrieb im so genannten neuen europäischen Fahrzyklus Nox-Rohemissionen von weniger als 300, 280, 235, 200, 180 oder 160 mg/km aufweisen und gleichzeitig Partikelrohemissionen von weniger als 35, 40, 45, 50, 55 oder 60 mg/km aufweisen. Vorteilhaft kann die EU5-Abgasnorm dadurch ohne eine aktive Nox-Abgasnachbehandlung oder zumindest mit einer nur gering wirksamen Nox-Abgasnachbehandlung erfolgen. Es kann beispielsweise lediglich ein HC-SCR-System mit einem Nox-Reduzierungspotential von lediglich 10 bis 20 Prozent eingesetzt werden, wobei beispielsweise die Nox-Grenzwerte von 280, 235, 180 mg/km Rohemissionsseitig um nicht mehr als 10 Prozent überschritten werden. Vorteilhaft kann dabei eine Rückführungsrate der Abgasrückführung, beispielsweise der in Figur 1 dargestellten Hochdruckabgasrückführung 37 niedrig gehalten werden, wobei auch die Partikelrohemission 55 niedrig gehalten werden kann.

Vorteilhaft kann das Kraftfahrzeug 79 mit der Verbrennungskraftmaschine 1 die Nox-Rohemission mit einem Wert von weniger als 140, 125, 105, 90, 80, 70, 60, 50 oder 40 mg/km aufweisen und gleichzeitig die Partikelrohemission mit einem Wert von weniger als 35, 40, 45, 50, 55 oder 60 mg aufweisen. Vorteilhaft kann dabei die EU6-Abgasnorm ohne eine aktive Nox-Nachbehandlung oder mit lediglich einer gering wirksamen Nox-Abgasnachbehandlung, zum Beispiel über ein HC-SCR-System mit beispielsweise lediglich 10 bis 20 Prozent Nox-Reduzierungspotential, das heißt, Nox-Grenzwerte von 125, 105, 80 mg unterschreitend einhalten. Vorteilhaft kann gleichzeitig trotz einem Einhalten der niedrigen Nox-Rohemissionen eine vergleichsweise niedrige Rückführungsrate der Abgasrückführung, beispielsweise der in Figur 1 dargestellten Hochdruckabgasrückführung 37 eingestellt werden, wobei sich die vorteilhaft niedrigen Werte der Partikelemission 55 ergeben

### Bezugszeichenliste

- 1: Verbrennungskraftmaschine
- 3: Niederdrucklader
- 5: Hochdrucklader
- 7: Abgasstrom
- 9: Niederdruckturbine
- 11: Ansaugstrom
- 13: Niederdruckverdichter
- 15: Hochdruckturbine
- 17: Hochdruckverdichter
- 19: Ladedruck
- 21: Zylinder
- 23: Steuereinheit
- 25: Steuervorrichtung
- 27: Abgasanlage
- 29: Hochdruckabgasbypass
- 31: Abgasklappe
- 33: Niederdruckabgasbypass
- 35: Wastegate
- 37: Hochdruckabgasrückführung
- 39: Abgasrückführungsklappe, Ventil
- 41: Ansaugvorrichtung
- 43: Hochdruckansaugbypass
- 45: Ladeluftkühlung
- 47: Oxykat
- 49: Partikelfilter
- 51: Rohemission
- 53: Nox-Emission
- 55: Partikelemission
- 57: Kennfeld
- 59: Schaubild
- 61: X-Achse
- 63: erste Y-Achse
- 65: zweite Y-Achse
- 67: erster Graph
- 69: zweiter Graph
- 71: dritter Graph
- 73: erster Pfeil
- 75: zweiter Pfeil
- 77: Schaubild
- 79: Kraftfahrzeug
- 80: Schaubild
- 82: Graph
- 84: Graph

## Patentansprüche

1. Selbstzündende Verbrennungskraftmaschine (1) mit
- einem ersten Lader (3),
- einem dem ersten Lader (3) saugseitig in Richtung der Verbrennungskraftmaschine nachgeschalteten zweiten Lader (5),
- einer Steuereinrichtung, wobei
- von der Steuereinrichtung der erste und zweite Lader (3, 5) derart einstellbar sind oder eingestellt werden, dass in einem Bereich von mindestens 30 Prozent eines Drehzahl-Mitteldruck- Kennfeldes (57) der Verbrennungskraftmaschine (1) zwischen der minimalen und der maximalen Drehzahl der Verbrennungskraftmaschine (1)
- die NOx-Rohemission (53) weniger als 3,8 g/kWh und
- die Partikel- Rohemission (55) weniger als 0,15 g/kWh beträgt.

2. Selbstzündende Verbrennungskraftmaschine, mit
- einem ersten Lader (3),
- einem dem ersten Lader (3) saugseitig in Richtung der Verbrennungskraftmaschine nachgeschalteten zweiten Lader (5),
- einer Steuereinrichtung, wobei
- von der Steuereinrichtung der erste und zweite Lader (3, 5) derart einstellbar sind oder eingestellt werden, dass in einem Bereich von mindestens 40 Prozent eines Drehzahl-Mitteldruck- Kennfeldes (57) der Verbrennungskraftmaschine (1) mit Drehzahlen zwischen 2.000 und 2.800 min-1 und Mitteldrücken von 4 bis 12 bar
- die NOx-Rohemission (53) weniger als 3,8 g/kWh und
- die Partikel- Rohemission (55) weniger als 0,15 g/kWh beträgt.

3. Verbrennungskraftmaschine nach einem der vorhergehenden Ansprüche, wobei mittels des Kennfelds (57) zusätzlich ein Abgaslambdawert zuordenbar ist.

4. Verbrennungskraftmaschine nach einem der vorhergehenden Ansprüche, wobei mittels des Kennfelds 57 ein Abgaslambdawert von mindestens 1,7, 1,8, 1,9, 2,0, 2,2 oder 2,5 zugeordnet wird.

5. Verbrennungskraftmaschine nach einem der vorhergehenden Ansprüche, wobei der erste Lader (3) und der zweite Lader (5) als Turbolader ausgebildet sind.

6. Verbrennungskraftmaschine nach einem der vorhergehenden Ansprüche, wobei die Verbrennungskraftmaschine (1) eine Abgasrückführung (37) aufweist.

7. Verbrennungskraftmaschine nach dem vorhergehenden Anspruch, wobei die Abgasrückführung (37) abgasseitig stromauf vor einer gegebenenfalls ersten Turbine (15) abzweigt und saugseitig stromab nach einem Verdichter (17) des zweiten Laders (5) einmündet.

8. Verbrennungskraftmaschine nach einem der vorhergehenden Ansprüche, wobei die spezifische Maximalleistung der Verbrennungskraftmaschine (1) weniger als 80 kW/dm³ Motorhubvolumen beträgt.

9. Verbrennungskraftmaschine nach einem der vorhergehenden Ansprüche, wobei das spezifische Maximalmoment der Verbrennungskraftmaschine (1) weniger als 250 nm/dm³ Motorhubvolumen beträgt.

10. Verbrennungskraftmaschine nach einem der vorhergehenden Ansprüche, wobei die Verbrennungskraftmaschine Injektoren mit einem stationären Durchfluss von weniger als 550 ml/30 sec bei regulärem Kraftstoff und einem Eintrittsdruck von 100 bar bei 20 °C aufweist.

11. Verbrennungskraftmaschine nach einem der vorhergehenden Ansprüche, wobei die Verbrennungskraftmaschine (1) Zylinder mit einem Zylindervolumen von weniger als 0,65 dm³ aufweist.

12. Verbrennungskraftmaschine nach einem der vorhergehenden Ansprüche, wobei die Verbrennungskraftmaschine (1) eine Zylinderanzahl von 5 oder weniger als 5 aufweist.

13. Kraftfahrzeug (79) mit einer Verbrennungskraftmaschine (1) nach einem der vorhergehenden Ansprüche.

14. Verfahren zum Betrieb einer selbstzündenden Verbrennungskraftmaschine (1) mit
- einem ersten Lader (3),
- einem dem ersten Lader (3) saugseitig nachgeschalteten zweiten Lader (5),
- einer Steuereinrichtung, wobei
- von der Steuereinrichtung der erste und zweite Lader (3, 5) derart eingestellt werden, dass in einem Bereich von mindestens 30 Prozent eines Drehzahl- Mitteldruck-Kennfeldes (57) der Verbrennungskraftmaschine (1) zwischen der minimalen und der maximalen Drehzahl der Verbrennungskraftmaschine (1)
- NOx-Rohemission (53) weniger als 3,8 g/kWh und
- Partikel- Rohemission (55) weniger als 0,15 g/kWh erreicht werden.

15. Verfahren zum Betrieb einer selbstzündende Verbrennungskraftmaschine (1) mit
- einem ersten Lader (3),
- einem dem ersten Lader (3) saugseitig nachgeschalteten zweiten Lader (5),
- von der Steuereinrichtung der erste und zweite Lader (3, 5) derart eingestellt werden, dass in einem Bereich von mindestens 40 Prozent eines Drehzahl- Mitteldruck-Kennfeldes (57) der Verbrennungskraftmaschine mit Drehzahlen zwischen 2.000 und 2.800 min-1 und Mitteldrücken von 4 bis 12 bar (1)
- NOx-Rohemission (53) weniger als 3,8 g/kWh und
- Partikel- Rohemission (55) weniger als 0,15 g/kWh
erreicht werden.
